# EUROPÄISCHE PATENTSCHRIFT

(11) **EP 1 730 016 B1**
(45) Veröffentlichungstag und Bekanntmachung des Hinweises auf die Patenterteilung: **06.08.2008**
(21) Anmeldenummer: 05716111.9
(22) Anmeldetag: 16.03.2005
(51) Int. Cl.: B62D 25/14, B62D 29/00

(54) **QUERTRÄGER ODER STRUKTURBAUTEIL FÜR EIN KRAFTFAHRZEUG**
CROSS MEMBER OR STRUCTURAL COMPONENT FOR A MOTOR VEHICLE
SUPPORT TRANSVERSAL OU COMPOSANT STRUCTUREL POUR VEHICULE AUTOMOBILE

(30) Priorität: 17.03.2004 DE 102004013384
(43) Veröffentlichungstag der Anmeldung: 13.12.2006
(73) Patentinhaber: Behr GmbH & Co. KG, 70469 Stuttgart (DE)
(72) Erfinder: MERKLE, Christian, 73655 Plüderhausen (DE); WOLF, Walter, 71570 Oppenweiler-Zell (DE)
(86) Internationale Anmeldenummer: PCT/EP2005/002791
(87) Internationale Veröffentlichungsnummer: WO 2005/090145

(56) Entgegenhaltungen:
- WO-A-00/02763
- WO-A-02/20334
- WO-A-03/031746
- PATENT ABSTRACTS OF JAPAN Bd. 018, Nr. 160 (M-1578), 17. März 1994 (1994-03-17) -& JP 05 330452 A (TOYOTA MOTOR CORP), 14. Dezember 1993 (1993-12-14)

## Beschreibung

Die Erfindung betrifft einen Querträger oder ein Strukturbauteil für ein Kraftfahrzeug gemäß dem Oberbegriff des Anspruchs 1.

Aus der DE 102 21 654 A1 ist ein Querträger für ein Kraftfahrzeug bekannt, der aus einer oberen Halbschale und einer unteren Halbschale besteht, die an ihren einander zugewandten Enden Laschen aufweisen, die durch einen Klebstoff miteinander verklebt sind. Zur Befestigung von Elementen, wie beispielsweise der Lenksäule, ist am Querträger ein Halter mittels mehrerer Schrauben befestigt. Die Schrauben sind nach dem Verschrauben verklebt.

Am Querträger kann eine als Rohr ausgebildete Verstärkung angebracht sein, wobei das Rohr an seinen Enden zwecks Vereinfachung der Anbringung am Querträger in seinem Querschnitt verändert sein kann.

Ferner sind Querträger oder andere Strukturbauteile bekannt, an denen Halter angeschweißt oder auf sonstige Weise angebracht sind. In Folge der Materialverdoppelung wird das Gewicht erhöht und der zusätzliche Arbeitsgang führt zu einer Erhöhung der Herstellungskosten.

Des Weiteren ist aus der WO 03/031746 A2 ein Querträger zur Unterstützung von Komponenten in einem Fahrzeug bekannt, welcher ein rohrförmig ausgeführtes Bauteil aus Metall umfasst, dessen Endbereiche in Form von Flanschen ausgebildet sind.

Derartige Querträger lassen jedoch noch Wünsche offen, insbesondere in Hinblick auf das Gewicht und die Steifigkeit der Anbindungsstelle.

Es ist Aufgabe der Erfindung, einen verbesserten Querträger zur Verfügung zu stellen.

Diese Aufgabe wird gelöst durch einen Querträger oder ein Strukturbauteil mit den Merkmalen des Anspruchs 1. Vorteilhafte Ausgestaltungen sind Gegenstand der Unteransprüche. Der Einfachheit halber wird hierauf im Folgenden lediglich auf einen Querträger Bezug genommen, jedoch kann ein entsprechend ausgebildetes Element auch an anderen Stellen als sonstiges Strukturbauteil verwendet werden.

Erfindungsgemäß ist ein Querträger vorgesehen, der in einem mittleren Bereich einen ersten Querschnitt mit einer ersten Fläche und einem ersten Umfang und in mindestens einem seiner beiden Endbereiche einen zweiten Querschnitt mit einer zweiten Fläche und einem zweiten Umfang aufweist, wobei das Verhältnis von erster Fläche zu erstem Umfang größer als das Verhältnis von zweiter Fläche zu zweitem Umfang ist. Dabei ist der Querträger in mindestens einem seiner Endbereiche abgeflacht und/oder breiter als in seinem mittleren Bereich ausgebildet. Eine derartige Ausgestaltung bildet eine momentensteife Anbindungsstelle. Die Herstellung kann dabei auf einfache Weise mittels Umformen erfolgen. Das Umformen kann vorzugsweise mittels Tiefziehen, Prägen mit Formstempeln, Innen- oder Außenhochdruck-Umformen, Magnet-Umformen bei gleichzeitigem Einformen von Stützelementen, wie beispielsweise Hülsen, oder Hämmern erfolgen. Eine derartige Ausgestaltung bietet große gestalterische Freiheiten bei guter Integrierbarkeit. Die Anzahl der Bauteile kann gering gehalten werden, wobei ein oder mehrere medienführende Kanäle integriert und/oder die Hohlräume als Kabelkanäle genutzt werden können. Dies ermöglicht eine kostengünstige Herstellung.

Bevorzugt wird der Querträger durch zwei Halbschalen gebildet, die miteinander auf bekannte Weise verbunden sind. Dabei können in einer oder beiden Halbschalen versteifende Elemente vorgesehen sein.

Die Halbschalen sind vorzugsweise Strangpress- oder Walzprofile, die in unverformten Zustand ein durchgehendes Profil aufweisen und von denen zumindest eine zumindest in einem ihrer Endbereiche umgeformt ist.

Zur Abstandswahrung zwischen den Wandbereichen des Querträgers in seinem umgeformten Endbereich ist im ungeformten Endbereich mindestens ein Stützkörper im Innenraum des Querträgers angeordnet, wobei insbesondere mindestens eine Schraube den Querträger und den hierin angeordneten Stützkörper durchdringt. Der Stützkörper ist durch eine Hülse gebildet.

Bevorzugt sind in mindestens einem Endbereich auf mindestens einer der beiden abgeflachten Seiten des Querträgers zwei oder mehr sich in Längsrichtung des Querträgers erstreckende und in den Innenraum des Querträgers ragende Vertiefungen vorgesehen. Diese ermöglichen eine optimale Versteifung und bieten gute Anbringungsmöglichkeiten.

Der Querträger kann zur Erhöhung der Steifigkeit in Längsrichtung vedaufende Rippen, vorzugsweise mindestens vier Rippen, aufweisen.

Im Querträger ist bevorzugt mindestens ein Hohlraum zum Durchführen eines Mediums, wie beispielsweise Luft, vorgesehen, so dass der Querträger einen Teil des Kraftfahrzeug-Belüftungssystems bildet und kein zusätzlicher Bauraum für Luftkanäle erforderlich ist.

Zur Erhöhung der Steifigkeit kann der Querträger in seinem Innenraum versteifende Elemente aufweisen, wobei es sich beispielsweise um eine Kunststoffstruktur, vorzugsweise mit kreuzförmig verlaufenden Rippen oder einer wabenartigen Struktur, handelt. Diese kann relativ einfach angespritzt werden und erhöht die Steifigkeit deutlich bei relativ geringem Gewicht. Trotz der versteifenden Elemente können im Innenraum des Querträgers Kanäle für ein durchzuführendes Medium vorgesehen sein.

Im Folgenden wird die Erfindung anhand von mehreren Ausführungsbeispielen, teilweise mit Varianten, unter Bezugnahme auf die Zeichnung im Einzelnen erläutert. In der Zeichnung zeigen:

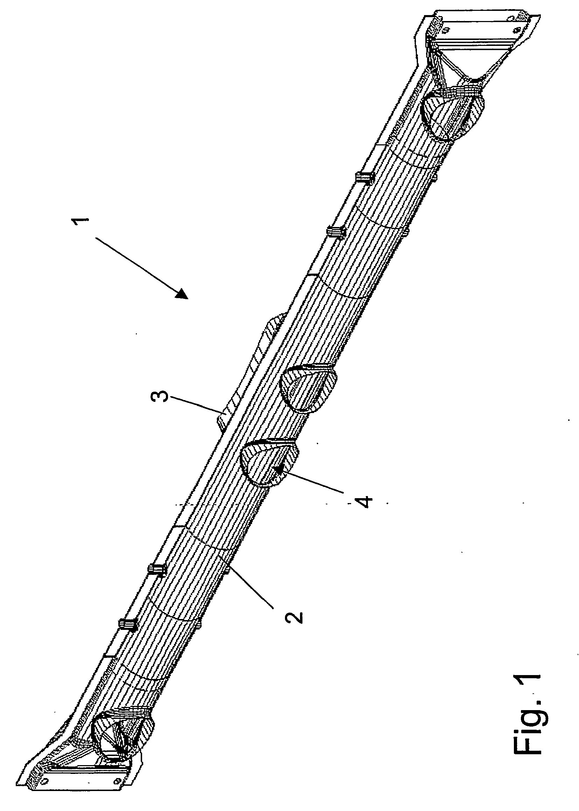

- Fig. 1: eine perspektivische Ansicht eines Querträgers gemäß dem ersten Ausführungsbeispiel ohne Anbauten,
- Fig. 2: eine perspektivische Ansicht des Querträgers von Fig. 1 mit hieran angebrachten Elementen,

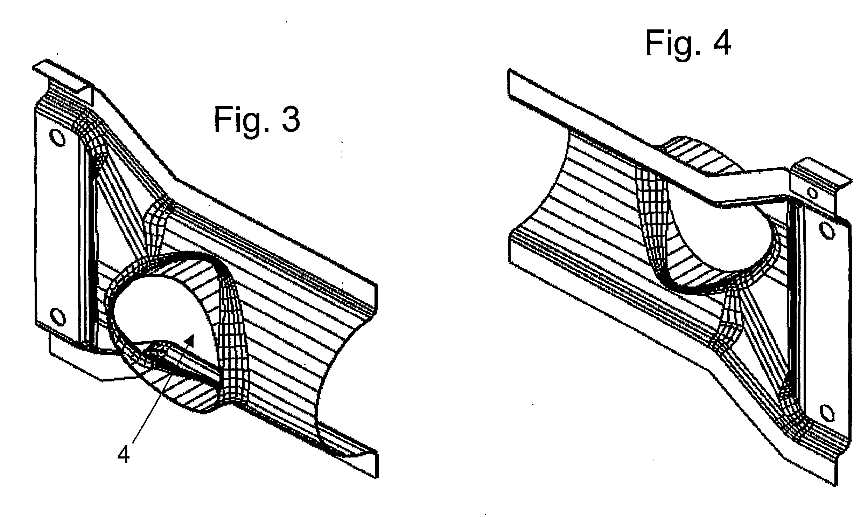

- Fig. 3: eine perspektivische Detailansicht eines Endbereichs einer Halbschale des Querträgers von Fig. 1,
- Fig. 4: eine andere perspektivische Detailansicht des in Fig. 3 dargestellten Endbereichs,

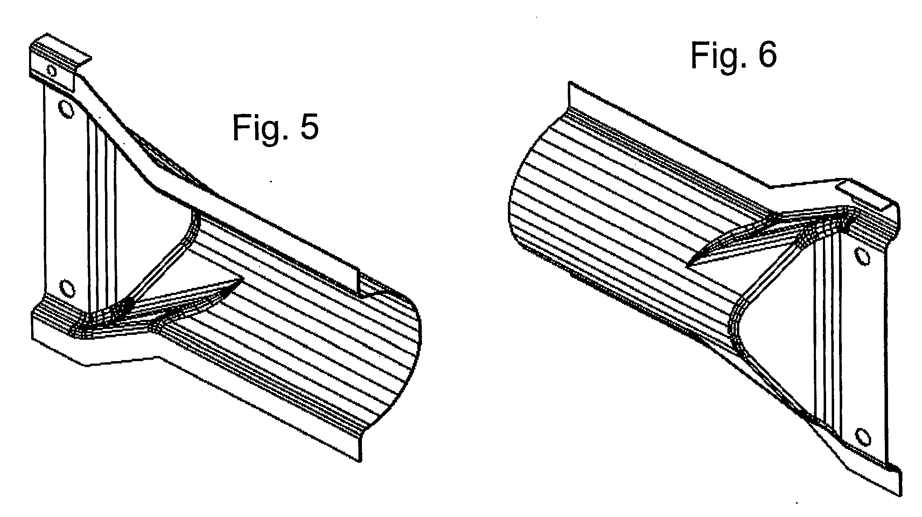

- Fig. 5: eine perspektivische Detailansicht eines Endbereichs der anderen Halbschale des Querträgers von Fig. 1,
- Fig. 6: eine andere perspektivische Detailansicht des in Fig. 5 dargestellten Endbereichs,
- Fig. 7: einen Schnitt durch den Querträger von Fig. 1,
- Fig. 8: einen Schnitt durch einen Endbereich eines Querträgers gemäß dem zweiten Ausführungsbeispiel vor dem Umformvorgang,
- Fig. 9: einen Fig. 8 entsprechenden Schnitt durch den Querträger nach dem Umformvorgang,
- Fig. 10: eine perspektivische Ansicht des Endbereich des Querträgers gemäß dem zweiten Ausführungsbeispiel,
- Fig. 11: eine Variante des zweiten Ausführungsbeispiel mit Stützkörpern,
- Fig. 12: einen Schnitt durch den Endbereich eines Querträgers gemäß dem dritten Ausführungsbeispiel,
- Fig. 13: einen Schnitt durch den Endbereich eines Querträgers gemäß dem vierten Ausführungsbeispiel,
- Fig. 14: einen Schnitt durch einen Endbereich eines Querträgers gemäß dem fünften Ausführungsbeispiel vor dem Umformvorgang,
- Fig. 15: eine perspektivische Ansicht des Endbereichs von Fig. 14 nach dem Umformvorgang,
- Fig. 16: einen Schnitt durch einen Endbereich eines Querträgers gemäß dem sechsten Ausführungsbeispiel vor dem Umformvorgang,
- Fig. 17: einen Schnitt durch den Endbereich von Fig. 16 nach dem Umformvorgang,
- Fig. 18: einen Schnitt durch den Endbereich eines Querträgers gemäß dem siebten Ausführungsbeispiel,
- Fig. 19: eine Draufsicht eines ersten hohlzylindrischen Stützelements,
- Fig. 20: eine Draufsicht eines zweiten hohlzylindrischen Stützelements,
- Fig. 21: eine perspektivische Ansicht eines dritten Stützelements,
- Fig. 22: eine perspektivische Ansicht eines vierten Stützelements,
- Fig. 23: eine perspektivische Ansicht eines fünften Stützelements,
- Fig. 24: eine perspektivische Ansicht eines sechsten Stützelements, und
- Fig. 25: einen Schnitt durch einen Endbereich eines Querträgers mit Darstellung einer Schraube.

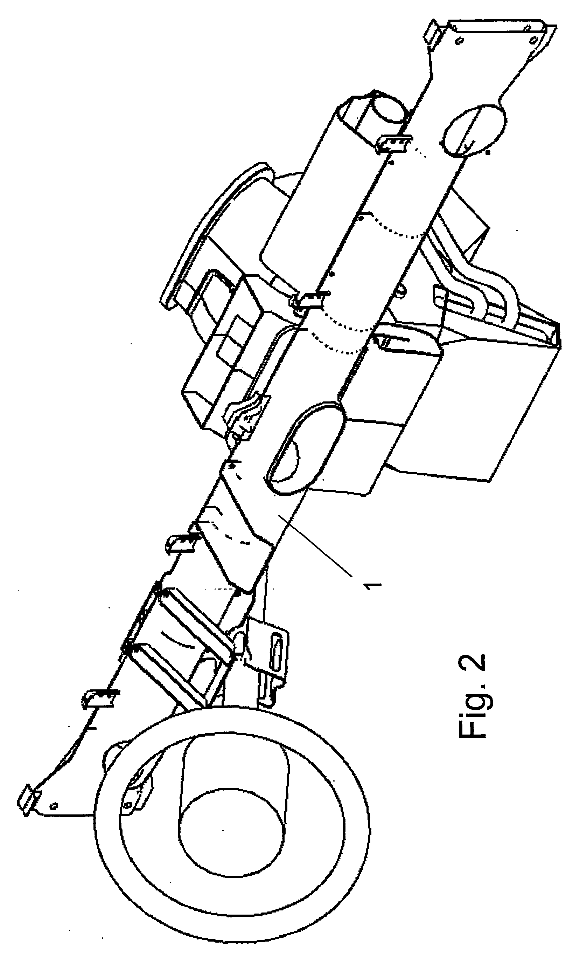

Eine Querträger 1 eines Kraftfahrzeugs mit integrierter Luftführung wird gemäß dem ersten Ausführungsbeispiel durch eine erste Halbschale 2 und eine zweite Halbschale 3 gebildet. Hierbei handelt es sich jeweils um eine Metallstruktur, die mittels Tiefziehen oder Strangpressen und nachfolgendem Bearbeiten, wobei unter anderem die längsseitigen Enden umgeformt werden, hergestellt ist. Im Falle des Strangpressens ist der Querträger bevorzugt einstückig ausgebildet. An den Längsseiten der Halbschalen 2 und 3 sind jeweils nach außen abstehende Ränder vorgesehen, die in Anlage miteinander gebracht und auf bekannte Weise zusammengefügt werden. Der Innenraum zwischen den beiden Halbschalen 2 und 3 ist gemäß dem vorliegenden Ausführungsbeispiel hohl ausgebildet, so dass die Durchführung von Luft möglich ist. Damit ist ein Teil des Belüftungssystems in den Querträger 1 integriert. Anstelle oder neben Luft können auch andere Medien durch den Querträger 1 geleitet werden. Der Querträger 1 weist quer zu seiner Längserstreckung angeordnete Öffnungen 4 zum Ein- und Ausleiten der Luft auf. Ferner sind am Querträger 1 weitere Elemente angebracht, wie in Fig. 2 dargestellt.

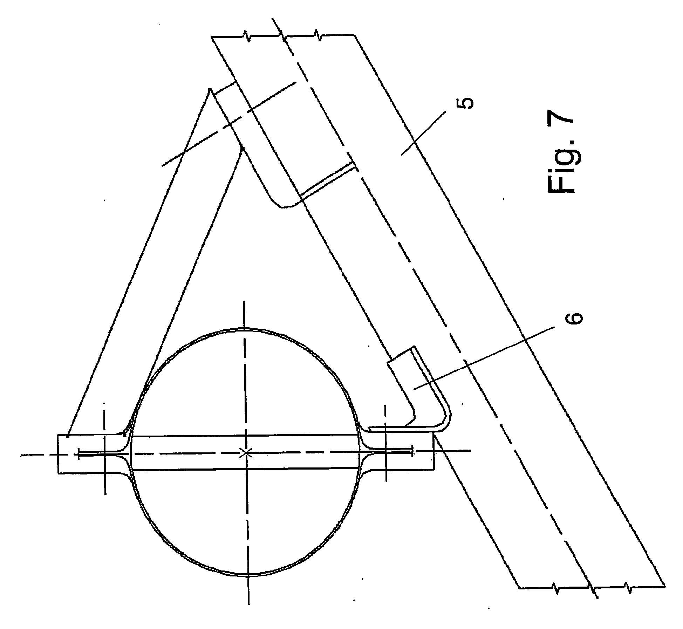

Fig. 7 zeigt den Bereich der Lenksäule 5. Hierbei erfolgt die Verbindung zwischen der Lenksäule 5 und dem Querträger 1 mittels Strangpressprofilen 6, die an den zu verbindenden Teilen angebracht sind, vorliegend mittels Schraubverbindungen.

Die Enden des Querträgers 1 sind in Folge des Umformvorgangs verbreitert ausgebildet, so dass sie als versteifendes Element dienen. Dadurch ergibt sich, dass das Verhältnis einer ersten Fläche und einem ersten Umfang in einem mittleren Querschnitt kleiner als das Verhältnis einer zweiten Fläche und einem zweiten Umfang in den beiden Endbereichen ist. Die verbreiterte Ausgestaltung der Endbereiche ermöglicht eine momentensteife Anbindung.

Gemäß einer nicht in der Zeichnung dargestellten Variante weisen die Halbschalen eine kreuzrippenartige Kunststoffstruktur auf, wie beispielsweise in der DE 100 65 219 C1 oder der DE 101 25 559 A1 beschrieben. Die Kunststoffstruktur ist an die jeweilige Metallstruktur angespritzt und dient der Versteifung des Querträgers. Ansonsten entspricht die Ausgestaltung des Querträgers der des zuvor beschriebenen ersten Ausführungsbeispiels.

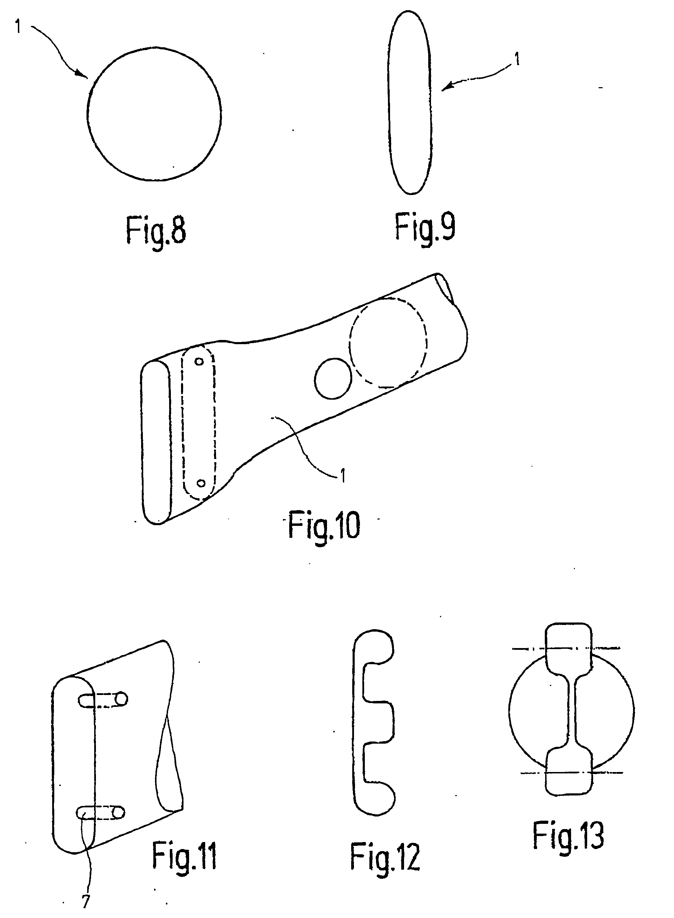

Fig. 8 zeigt den Querschnitt eines Endbereichs eines rohrförmigen Strangpressprofils, das einen Querträger 1 gemäß dem zweiten Ausführungsbeispiel bildet, vor und Fig. 9 nach dem Umformen. Der mittlere, deutlich größere Bereich des Querträgers 1 bleibt in seinem kreisförmigen Querschnitt unverändert. Jeder der beiden Endbereiche weist zwei im Wesentlichen parallel zueinander verlaufende gerade Bereiche und zwei diese geraden Bereiche in einem Radius verbindende Bereiche auf, so dass wiederum das Verhältnis einer ersten Fläche und einem ersten Umfang in einem mittleren Querschnitt des Querträgers 1 kleiner als das Verhältnis einer zweiten Fläche und einem zweiten Umfang in den beiden Endbereichen ist. Die verbreiterte und abgeflachte Ausgestaltung der Endbereiche ermöglicht, entsprechend dem ersten Ausführungsbeispiel, eine momentensteife Anbindung.

Zur Begrenzung einer Verformung der Endbereiche durch zu große Krafteinwirkung, beispielsweise von Montageschrauben, sind gemäß der in Fig. 11 dargestellten Variante des zweiten Ausführungsbeispiels Stützkörper 7, vorliegend in Form von Hülsen, vorgesehen, welche in Verlängerung von Montagebohrungen, die in den Endbereichen zwecks Anbringung des Querträgers 1 vorgesehen sind, im Innenraum des Querträgers 1 angeordnet sind. Die Form des Querträgers 1 entspricht der des zuvor beschrieben zweiten Ausführungsbeispiels.

Fig. 12 zeigt den Querschnitt eines verbreiterten und abgeflachten Endbereichs eines Querträgers 1 gemäß dem dritten Ausführungsbeispiel. Das Ausgangsmaterial hierfür entspricht dem in Fig. 8 dargestellten Strangpressprofil. Auch dieses ist in beiden Endbereichen des Querträgers 1 derart umgeformt, dass das Verhältnis einer ersten Fläche und einem ersten Umfang in einem mittleren Querschnitt des Querträgers 1 kleiner als das Verhältnis einer zweiten Fläche und einem zweiten Umfang in den beiden Endbereichen ist. Hierbei sind in beiden Endbereichen auf jeweils einer der beiden abgeflachten Seiten zwei sich in Längsrichtung des Querträgers 1 erstreckende in den Innenraum des Querträgers 1 ragende Vertiefungen vorgesehen, welche zur Erhöhung der Steifigkeit dienen.

Fig. 13 zeigt den Endbereich eines Querträgers 1 gemäß dem vierten Ausführungsbeispiel, welcher mittels Umformen ausgehend von einem hohlzylindrischen Profil, welches im Mittelbereich des Querträgers 1 erhalten ist, derart abgeflacht ausgebildet ist, dass zwei Hohlräume an den äußeren Enden jedes Endbereichs ausgebildet sind, die von einem Bereich unterteilt sind, in dem die beiden Seitenwände gerade ausgebildet sind und aneinander anliegen.

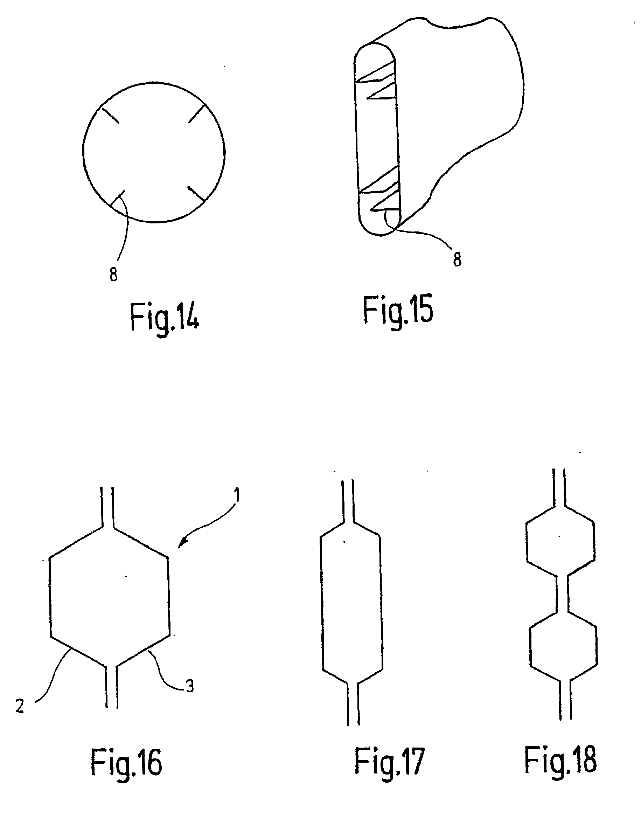

Fig. 14 zeigt ein Strangpressprofil in Rohrform mit sich nach innen erstrekkenden, in Längsrichtung verlaufenden Rippen 8. Dieses wird zur Bildung der Endbereiche des Querträgers 1 entsprechend dem zweiten Ausführungsbeispiel umgeformt, wodurch sich die in Fig. 15 dargestellte Ausgestaltung ergibt. Die Rippen 8 können bei entsprechender Umformung gleichzeitig als Stützelemente dienen, die einen Mindestabstand der Wände sicherstellen und ein Zusammenbrechen der Statik beim Verschrauben eines Bauteils verhindern. Ferner können bei entsprechender Ausgestaltung der Rippen 8 diese auch als Luftleitelemente und/oder der Positionierung von im Querträger 1 verlaufenden Leitungen dienen. Dabei sind Schraubbefestigungen für den Querträger 1 insbesondere etwa mittig zwischen zwei an einander gegenüberliegenden Seiten angeordneten Rippen 8 angeordnet.

Gemäß einer nicht in der Zeichnung dargestellten Abwandlung sind lediglich zwei Rippen vorgesehen, die im umgeformten Zustand im entsprechenden Endbereich benachbart zur Schraubbefestigung angeordnet sind. Dabei ist die Schraubbefestigung insbesondere möglichst dicht benachbart zwischen Rippe und Schmalseite des Endbereichs angeordnet, so dass auf Stützelemente verzichtet werden kann.

Das sechste und siebte Ausführungsbeispiel betrifft einen Querträger 1 aus zwei wannenartigen Halbschalen 2 und 3 mit in Längsrichtung verlaufenden, sich nach außen erstreckenden Rändern. Die Halbschalen 2 und 3 bestehen aus je einem Walzprofil oder Tiefziehteilen. Fig. 16 zeigt hierbei den unverformten mittleren Bereich der jeweiligen Querträger 1, welcher sechseckig mit etwa gleichen Seitenlängen (wabenartig) ausgebildet ist.

Gemäß dem in Fig. 17 dargestellten sechsten Ausführungsbeispiel sind die Endbereiche derart umgeformt, dass die Bodenflächen der Halbschalen 2 und 3 näher zueinander angeordnet sind als im unverformten Zustand, jedoch ist zwischen den Bodenflächen noch ein Abstand vorgesehen.

Gemäß dem in Fig. 18 dargestellten siebten Ausführungsbeispiel sind die Endbereiche derart umgeformt, dass zwei wabenartige Bereiche ausgebildet sind, die etwas voneinander beabstandet sind.

In beiden Fällen sind die Endbereiche abgeflacht und verbreitert ausgebildet, so dass diese Bereiche versteift sind.

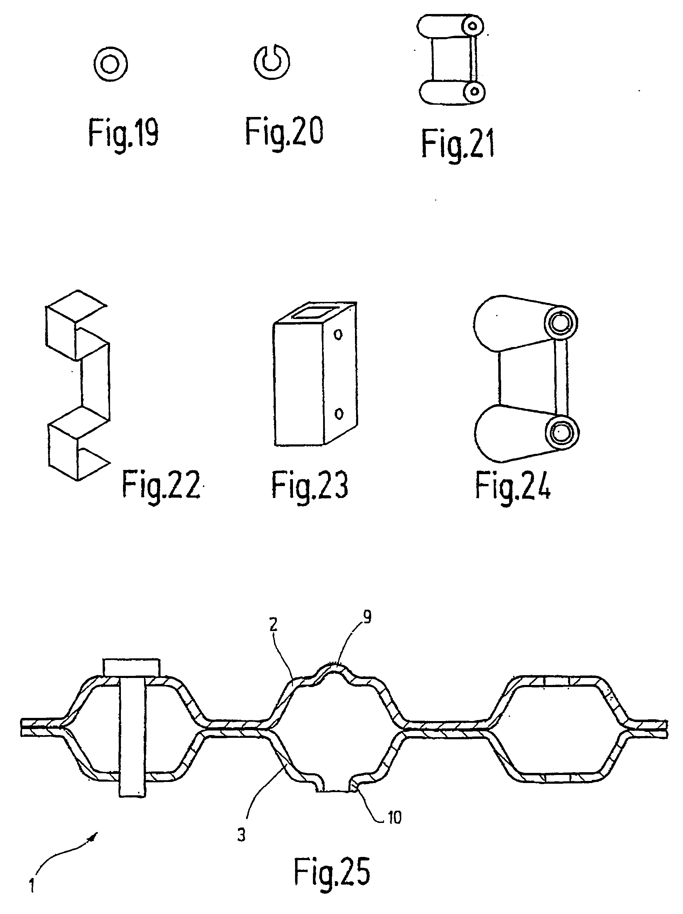

Im Folgenden werden unter Bezugnahme auf die Figuren 19 bis 24 verschiedene der Abstandswahrung dienenden Stützelemente näher erläutert, insbesondere bei aus zwei Halbschalen bestehenden Querträgern. Fig. 19 zeigt eine Draufsicht auf ein erstes hohlzylindrisch ausgebildetes Stützelement mit geschlossenem Profil, wie es beispielsweise mittels Abtrennen eines durchgehenden Rohrprofils hergestellt werden kann, und Fig. 20 zeigt eine Draufsicht auf ein zweites hohlzylindrisch ausgebildetes Stützelement mit auf einer Seite offenem Profil.

Fig. 21 zeigt ein Stützelement, das für zwei Stützstellen ausgebildet ist. Hierbei sind zwei geschlossene hohlzylindrische Bereiche über einen durchgehenden Zwischenbereich verbunden, so dass der Zwischenbereich eine zusätzliche versteifende Funktion erfüllen kann. Fig. 22 zeigt ein Stützelement, das ebenfalls für zwei Stützstellen geeignet ist, wobei es sich um ein seitlich offenes Profil handelt, das lediglich mittels des Anziehens der Schrauben zwischen den Innenwänden des Querträgers gehalten wird. Zur Aufnahme der Schrauben sind zwei U-förmige Bereiche in diesem beispielsweise als Strangpresselement, Walzprofil-Abschnitt, Abkant- oder Biegeteil ausgebildeten Teil vorgesehen. Fig. 23 zeigt ein Vierkantprofil mit quer verlaufenden Bohrungen zur Aufnahme der Schrauben, welches als Stützelement dient. Fig. 24 zeigt ein Gussteil, welches dem Stützelement von Fig. 21 entspricht. Hierbei kann es sich beispielsweise um ein reines Kunststoffteil oder ein Kunststoffteil handeln, in dem zwei Metallhülsen eingespritzt sind. Ferner können in solche Bauteile weitere Funktionen integriert sein, wie zum Beispiel das Umlenken der Luft zu Seitenauslässen.

Fig. 25 zeigt einen Schnitt durch einen Endbereich eines Querträgers 1, welcher drei sich in Längsrichtung des Querträgers 1 erstreckende Hohlräume aufweist, die durch Anlagebereiche der beiden den Querträger 1 bildenden Halbschalen 2 und 3 voneinander getrennt sind. Im Bereich der beiden äußeren Hohlräume sind Bohrungen vorgesehen, durch die jeweils eine der Befestigung dienende Schraube gesteckt ist (nur links dargestellt). Die Halbschale 2 ist im mittleren Bereich mit einem Index 9 in Noppenform und die Halbschale 3 mit einem Index 10 in Durchzugsform versehen.

Die Flanken der seitlichen Hohlräume in den Endbereichen sollten möglichst steil stehen und nur geringen Abstand zur benachbarten Schraube aufweisen. Dadurch können die seitlichen Wände links und rechts der Schraube die Funktion des Stützkörpers übernehmen, so dass gegebenenfalls auf Stützelemente, wie in den Figuren 19 bis 24 dargestellt, verzichtet werden kann. Eine etwas längere Schraube ergibt eine bessere Verspannung der Verbindung als bei einem dünnen Flansch und kurzer Schraube.

### Bezugszeichenliste

- 1: Querträger
- 2: erste Halbschale
- 3: zweite Halbschale
- 4: Öffnung
- 5: Lenksäule
- 6: Strangpressprofil
- 7: Stützkörper
- 8: Rippe
- 9: Index
- 10: Index

## Patentansprüche

1. Querträger (1), insbesondere für ein Kraftfahrzeug, wobei der Querträger (1) in einem mittleren Bereich einen ersten Querschnitt mit einer ersten Fläche und einem ersten Umfang und in mindestens einem seiner beiden Endbereiche einen zweiten Querschnitt mit einer zweiten Fläche und einem zweiten Umfang aufweist, wobei das Verhältnis von erster Fläche zu erstem Umfang größer als das Verhältnis von zweiter Fläche zu zweitem Umfang ist, wobei der Querträger (1) in mindestens einem seiner Endbereiche abgeflacht und/oder in mindestens einem seiner Endbereiche breiter als in seinem mittleren Bereich ausgebildet ist **dadurch gekennzeichnet, dass** in mindestens einem Endbereich mindestens ein, durch eine Hülse gebildeter Stützkörper (7) im Innenraum des Querträgers (1) angeordnet ist.

2. Querträger nach Anspruch 1, **dadurch gekennzeichnet, dass** der Querträger zwei Halbschalen (2, 3) aufweist, die miteinander verbunden sind.

3. Querträger nach Anspruch 2, **dadurch gekennzeichnet, dass** die Halbschalen (2, 3) Tiefzieh-, Strangpress- oder Walzprofile sind, von denen zumindest eine zumindest in einem ihrer Endbereiche umgeformt ist.

4. Querträger nach einem der vorhergehenden Ansprüche, **dadurch gekennzeichnet, dass** in mindestens einem Endbereich auf mindestens einer der beiden abgeflachten Seiten des Querträgers (1) zwei oder mehr sich in Längsrichtung des Querträgers (1) erstreckende und in den Innenraum des Querträgers (1) ragende Vertiefungen vorgesehen sind.

5. Querträger nach einem der vorhergehenden Ansprüche, **dadurch gekennzeichnet, dass** in mindestens einem Endbereich beidseitig der beiden abgeflachten Seiten des Querträgers (1) Flanken vorgesehen sind, die in einem Winkel von ca. 80 bis 100° zu den abgeflachten Seiten angeordnet sind.

6. Querträger nach einem der vorhergehenden Ansprüche, **dadurch gekennzeichnet, dass** der Querträger (1) in Längsrichtung verlaufende Rippen (8) aufweist.

7. Querträger nach Anspruch 6, **dadurch gekennzeichnet, dass** der Querträger (1) mindestens zwei, insbesondere genau zwei oder genau vier Rippen (8) aufweist.

8. Querträger nach einem der vorhergehenden Ansprüche, **dadurch gekennzeichnet, dass** der Querträger (1) einen Hohlraum zum Durchführen eines Mediums aufweist.

9. Querträger nach einem der vorhergehenden Ansprüche, **dadurch gekennzeichnet, dass** der Querträger (1) in seinem Innenraum versteifende Elemente aufweist.

10. Querträger nach Anspruch 9, **dadurch gekennzeichnet, dass** die versteifenden Elemente durch mindestens eine Kunststoffstruktur gebildet sind.

11. Querträger nach Anspruch 9 oder 10, **dadurch gekennzeichnet, dass** die versteifenden Elemente durch kreuzförmig verlaufende Rippen oder wabenartige Strukturen gebildet sind.

## Claims

1. A cross member (1), in particular for a motor vehicle, the cross member (1) having a first cross section with a first area and a first circumference in a central region, and having a second cross section with a second area and a second circumference in at least one of its two end regions, wherein the ratio of the first area to the first circumference is greater than the ratio of the second area to the second circumference and the cross member (1) is of flattened design in at least one of its end regions and/or the cross member (1) is of wider design in at least one of its end regions than in its central region, **characterized in that** in at least one end region, at least one supporting body (7), formed by a sleeve is arranged in the interior of the cross member (1).

2. The cross member as claimed in claim 1, **characterized in that** the cross member has two half shells (2, 3) which are connected to each other.

3. The cross member as claimed in claim 2, **characterized in that** the half shells (2, 3) are deep-drawn, extruded or rolled profiles of which at least one is deformed at least in one of its end regions.

4. The cross member as claimed in one of the preceding claims, **characterized in that**, in at least one end region, two or more depressions which extend in the longitudinal direction of the cross member (1) and protrude into the interior of the cross member (1) are provided on at least one of the two flattened sides of the cross member (1) .

5. The cross member as claimed in one of the preceding claim, **characterized in that**, in at least one end region, flanks are provided on both sides of the two flattened sides of the cross member (1) and are arranged at an angle of approx. 80 to 100° to the flattened sides.

6. The cross member as claimed in one of the preceding claims, **characterized in that** the cross member (1) has ribs (8) running in the longitudinal direction.

7. The cross member as claimed in claim 6, **characterized in that** the cross member (1) has at least two, in particular precisely two or precisely four, ribs (8).

8. The cross member as claimed in one of the preceding claims, **characterized in that** the cross member (1) has a cavity through which a medium passes.

9. The cross member as claimed in one of the preceding claims, **characterized in that** the cross member (1) has stiffening elements in its interior.

10. The cross member as claimed in claim 9, **characterized in that** the stiffening elements are formed by at least one plastic structure.

11. The cross member as claimed in claim 9 or 10, **characterized in that** the stiffening elements are formed by ribs running crosswise or by honeycomblike structures.

## Revendications

1. Traverse (1), en particulier pour un véhicule automobile, où la traverse (1) présente, dans une zone centrale, une première section ayant une première surface et une première circonférence et, dans au moins l'une de ses deux zones d'extrémités, une deuxième section ayant une deuxième surface et une deuxième circonférence, où le rapport de la première surface relativement à la première circonférence est plus grand que le rapport de la deuxième surface relativement à la deuxième circonférence, où la traverse (1), dans au moins l'une de ses zones d'extrémités, est configurée en étant aplatie et / ou dans au moins l'une de ses zones d'extrémités est configurée en étant plus largue que dans sa zone centrale, **caractérisée en ce que**, dans au moins une zone d'extrémité, au moins un corps de soutien (7), formé par un manchon, est disposé dans l'espace intérieur de la traverse (1).

2. Traverse selon la revendication 1, **caractérisée en ce que** la traverse présente deux demi-coques (2, 3) qui sont assemblées l'une à l'autre.

3. Traverse selon la revendication 2, **caractérisée en ce que** les demi-coques (2, 3) sont des profilés obtenus par emboutissage profond, des profilés filés à la presse ou laminés, demi-coques dont au moins l'une d'elles est mise en forme dans au moins l'une de ses zones d'extrémités.

4. Traverse selon l'une quelconque des revendications précédentes, **caractérisée en ce qu'**il est prévu, dans au moins une zone d'extrémité, sur au moins l'un des deux côtés aplatis de la traverse (1), deux évidements, ou plus, s'étendant dans le sens longitudinal de la traverse (1) et pénétrant dans l'espace intérieur de la traverse (1).

5. Traverse selon l'une quelconque des revendications précédentes, **caractérisée en ce qu'**il est prévu, dans au moins une zone d'extrémité, sur les deux côtés aplatis de la traverse (1), des flancs qui sont disposés suivant un angle compris entre 80° et 100° par rapport aux côtés aplatis.

6. Traverse selon l'une quelconque des revendications précédentes, **caractérisée en ce que** la traverse (1) présente des ailettes (8) s'étendant dans le sens longitudinal.

7. Traverse selon la revendication 6, **caractérisée en ce que** la traverse (1) présente au moins deux ailettes (8), en particulier précisément deux ou précisément quatre ailettes.

8. Traverse selon l'une quelconque des revendications précédentes, **caractérisée en ce que** la traverse (1) présente un espace creux pour le passage d'un milieu en circulation.

9. Traverse selon l'une quelconque des revendications précédentes, **caractérisée en ce que** la traverse (1) présente, dans son espace intérieur, des éléments raidisseurs.

10. Traverse selon la revendication 9, **caractérisée en ce que** les éléments raidisseurs sont formés par au moins une structure en matière plastique.

11. Traverse selon la revendication 9 ou 10, **caractérisée en ce que** les éléments raidisseurs sont formés par des ailettes s'étendant de façon cruciforme ou bien formés par des structures de type nid d'abeilles.
